# EUROPÄISCHE PATENTSCHRIFT

(11) **EP 3 969 782 B1**
(45) Veröffentlichungstag und Bekanntmachung des Hinweises auf die Patenterteilung: **07.06.2023**
(21) Anmeldenummer: 20711811.8
(22) Anmeldetag: 05.03.2020
(51) Int. Cl.: F16H 57/00, F16H 1/28, F16H 57/08

(54) **PLANETENTRÄGER MIT FLEXIBLEN BOLZEN UND VERSTEIFUNGSRIPPE**
PLANET CARRIER WITH FLEXIBLE BOLTS AND STIFFENING RIB
PORTE-SATELLITES AVEC BOULONS FLEXIBLES ET NERVURE DE RENFORCEMENT

(30) Priorität: 16.05.2019 DE 102019207100
(43) Veröffentlichungstag der Anmeldung: 23.03.2022
(73) Patentinhaber: ZF Friedrichshafen AG, 88046 Friedrichshafen (DE); ZF Wind Power Antwerpen NV, 3920 Lommel (BE)
(72) Erfinder: MOERS, Sven, 2260 Westerlo (BE)
(74) Vertreter: ZF Friedrichshafen AG
(86) Internationale Anmeldenummer: PCT/EP2020/055763
(87) Internationale Veröffentlichungsnummer: WO 2020/229008

(56) Entgegenhaltungen:
- EP-A1- 0 003 894
- EP-B1- 0 003 894
- WO-A1-2007/007049
- CN-U- 203 258 045
- DE-A1-102017 219 614

## Beschreibung

Die Erfindung betrifft eine Anordnung nach dem Oberbegriff von Anspruch 1.

Aus dem Stand der Technik sind sogenannte Flex Pins bekannt. Flex-Pins werden etwa in der Offenlegungsschrift DE 1 500 451 A1 beschrieben. Bei einem Flex-Pin handelt es sich um einen flexiblen Zapfen, auf dem eine Buchse montiert ist. Auf der Buchse ist ein Planetenrad drehbar gelagert. Verformt sich der Zapfen, wird dies durch eine Verkippung der Buchse ausgeglichen. Durch die Verformbarkeit des Zapfens kommt es zu einem Lastausgleich in der Planetenstufe. Das Dokument DE102017219614 A1 offenbart z.B. eine Anordnung mit einem Planetenträger.

Bei Schrägverzahnten Planetenstufen treten in den Zahneingriffen axial gerichtete Kräfte auf. Die Axialkraft in einen dem Zahneingriff eines Planetenrads mit einem Sonnenrad ist der Axialkraft im Zahneingriff des Planetenrads mit einem Hohlrad entgegengerichtet. Dadurch wirkt ein Kippmoment auf das Planetenrad. Dieses Kippmoment würde bei einem Flex Pin zu unerwünschten Verformungen führen. Daher ist es schwierig, eine schrägverzahnte Planetenstufe mit Flex-Pins zu versehen. Geradverzahnte Zahnräder führen aber zu erhöhten Geräuschemissionen.

Der Erfindung liegt die Aufgabe zugrunde, die den aus dem Stand der Technik bekannten Lösungen innewohnenden Nachteile zu eliminieren. Insbesondere soll ein Lastausgleich in einer Planetenstufe erzielt werden, ohne die Geräuschemissionen zu erhöhen. Insbesondere soll die Biegefestigkeit des Zapfens entlang des gesamten Umfangs verbessert.

Diese Aufgabe wird gelöst durch eine Anordnung nach Anspruch 1. Bevorzugte Weiterbildungen sind in den Unteransprüchen enthalten.

Die Anordnung umfasst einen Planetenträger mit mindestens eine Wange. Bei einer Wange handelt es sich um eine Stützstruktur, in der Planetenbolzen fixiert sind. Ein drehbarer Planetenträger ist gewöhnlich mit der Wange drehbar in einer drehfesten Struktur, etwa einem Getriebegehäuse, gelagert.

Die Planetenbolzen des Planetenträgers werden vorzugsweise durch jeweils einen Zapfen und eine Buchse gebildet. Entsprechend umfasst die erfindungsgemäße Anordnung mindestens einen Zapfen und mindestens eine Buchse auf.

Bei einer Buchse handelt es sich um einen rotationssymmetrischen Körper mit mindestens einem Hohlraum. Der Hohlraum und der Körper sind bezüglich einer gemeinsamen Achse rotationssymmetrisch. Weiterhin ist der Hohlraum geöffnet, weist also mindestens eine Öffnung auf. Die Öffnung ist zu derselben Achse rotationssymmetrisch. Insbesondere kann mindestens ein Teil der Buchse die Form eines Hohlzylinders haben.

Vorzugsweise die Buchse und der Zapfen bilden zusammen einen Planetenbolzen. Die Buchse dient der Aufnahme mindestens eines Planetenrads. Das Planetenrad ist vorgesehen, drehbar in der Buchse gelagert zu werden. Eine Drehachse des Planetenrads entspricht dabei der Symmetrieachse der Buchse. Die Buchse bildet entweder einen Innenring eines Lagers, mit dem das Planetenrad in der Buchse gelagert ist, oder einen Lagersitz, auf dem ein Innenring des Lagers fixiert werden kann. Entsprechend hat ein Teil der Oberfläche der Buchse vorzugsweise die Form einer Mantelfläche eines geraden Kreiszylinders.

Bevorzugt ist neben der Buchse auch der Zapfen rotationssymmetrisch zu der Drehachse des Planetenrads.

Der Zapfen weist zwei axiale Enden auf - ein erstes Ende und ein zweites Ende. Vorzugsweise besteht der Zapfen aus drei Stücken: dem ersten Ende, dem zweiten Ende und einem Zwischenstück. Das erste Ende und das zweite Ende sind axial voneinander beabstandet. Zwischen dem ersten Ende und dem zweiten Ende befindet sich das Zwischenstück, das die beiden Enden miteinander verbindet. Insbesondere kann sich das Zwischenstück zwischen einer ersten und einer zweiten Ebene befinden, die radial verlaufen, d.h. orthogonal zu der Drehachse des Planetenrads ausgerichtet sind. Das erste Ende des Zapfens und das Zwischenstück befinden sich dann auf unterschiedlichen Seiten der ersten Ebene. Entsprechend befinden sich das zweite Ende des Zapfens und das Zwischenstück auf unterschiedlichen Seiten der zweiten Ebene.

Das erste Ende des Zapfens ist in der Wange fixiert. Die Fixierung ist vorzugsweise starr, d.h. derart ausgeführt, dass das erste Ende des Zapfens relativ zu der ersten Wange unbeweglich ist. Insbesondere kann der Zapfen in seinem ersten Ende einstückig mit der Wange verbunden sein.

Mindestens ein Teil des Zapfens ragt in die Buchse bzw. in den von der Buchse gebildeten Hohlraum hinein. Dies bedeutet umgekehrt, dass mindestens ein Teil der Buchse den Zapfen in Umfangsrichtung umschließt. Der in die Buchse hineinragende Teil des Zapfens umfasst das zweite Ende des Zapfens. Insbesondere befindet sich das zweite Ende des Zapfens also in der Buchse bzw. in dem Hohlraum.

Das zweite Ende des Zapfens ist in der Buchse fixiert. Vorzugsweise ist die Fixierung starr, d.h. derart, dass das zweite Ende des Zapfens relativ zu dem Teil der Buchse, in dem das zweite Ende fixiert ist, unbeweglich ist. Zwischen dem zweiten Ende des Zapfens und der Buchse kann etwa eine form- und/oder kraftschlüssige Verbindung bestehen. Das zweite Ende des Zapfens und die Buchse sind vorzugsweise zweistückig miteinander verbunden. Dabei bilden das zweite Ende des Zapfens und die Buchse zwei physisch voneinander getrennte Stücke.

Zwischen dem Zapfen und der Buchse verbleibt vorzugsweise ein Zwischenraum. Der Zwischenraum verläuft vollständig um die Drehachse des Planetenrads herum. Es handelt sich um einen Teil des Hohlraums der Buchse, der nicht durch den Zapfen ausgefüllt wird. Vorzugsweise ist der Zwischenraum zu der Drehachse des Planetenrads rotationssymmetrisch. Dies ist gleichbedeutend damit, dass der mindestens eine Teil des Zapfens axial in der Buchse zentriert ist.

Bevorzugt ist mindestens ein Teil des Zwischenraums axial zwischen der Wange bzw. dem Bereich der Wange, in dem das erste Ende des Zapfens fixiert ist, und dem Bereich der Buchse, in dem das zweite Ende des Zapfens fixiert ist, angeordnet.

Der Zwischenraum ist vorzugsweise mit einem nachgiebigen Medium gefüllt. Insbesondere kann es sich bei dem Medium um ein Fluid, etwa Schmierstoff und/oder Luft handeln.

Durch die beschriebene Anordnung ist vorzugsweise ein erstes axiales Ende der Buchse freitragend. Dies bedeutet, dass das erste axiale Ende der Buchse ausschließlich von angrenzenden Teile der Buchse getragen wird. Es besteht keine Fügeverbindung zwischen dem ersten axialen Ende der Buchse und Mitteln, die nicht zu der Buchse gehören.

Da das erste axiale Ende der Buchse freitragend ist, ist es vorzugsweise in axialer Richtung relativ zum dem Zapfen beweglich. Eine entsprechende Bewegung geht mit einer elastischen Verformung des Zapfens einher. Der aus dem Zapfen und der Buchse gebildete Planetenbolzen weist also die Verformungseigenschaften eines Flex-Pins auf.

Erfindungsgemäß weist der Planetenträger mindestens ein Versteifungselement und einen Stützring auf. Das Versteifungselement dient der Versteifung der Buchse. Dazu ist es in der Buchse und in dem Stützring fixiert und bildet so eine versteifende Verbindung der Buchse mit dem Stützring. Über das Versteifungselement werden Kräfte von der Buchse in dem Stützring abgestützt.

Das Versteifungselement ist vorzugsweise in einem zweiten axialen Ende der Buchse fixiert. Das erste axiale Ende und das zweite axiale Ende der Buchse sind axial voneinander beabstandet. Zwischen dem ersten axialen Ende und dem zweiten axialen Ende befindet sich ein Zwischenstück, das die beiden axialen Enden miteinander verbindet. Die Buchse besteht aus drei Stücken: dem ersten axialen Ende, dem zweiten axialen Ende und dem Zwischenstück. Insbesondere kann sich das Zwischenstück zwischen einer dritten und einer vierten Ebene befinden, die radial verlaufen, d.h. die orthogonal zu der Drehachse des Planetenrads ausgerichtet sind. Das erste axiale Ende der Buchse und das Zwischenstück befinden sich auf unterschiedlichen Seiten der dritten Ebene. Entsprechend befinden sich das zweite axiale Ende der Buchse und das Zwischenstück auf unterschiedlichen Seiten der vierten Ebene.

Das Versteifungselement ist bevorzugt einstückig in der Buchse und/oder in dem Stützring fixiert. Insbesondere können die Buchse, das Versteifungselement und der Stützring einstückig miteinander verbunden sein. In dem Fall bildet ein einziges Stück die Buchse, das Versteifungselement und den Stützring.

Das Versteifungselement versteift die Buchse vorzugsweise gegenüber einer Verkippung um eine bezüglich einer Dreh- bzw. Mittelachse des Planetenträgers tangential verlaufende Achse. Diese Achse schneidet die Drehachse des Planetenrads rechtwinklig und ist tangential zu einem Kreis ausgerichtet, der vollständig in einer orthogonal zu der Dreh- bzw. Mittelachse des Planetenträgers ausgerichteten Ebene verläuft, und dessen Mittelpunkt auf der Dreh- bzw. Mittelachse des Planetenträgers liegt. Insbesondere kann es sich bei dem Versteifungselement um eine bezüglich der Dreh- bzw. Mittelachse des Planetenträgers radial verlaufende Rippe handeln.

Der Stützring verläuft ringförmig. Dies bedeutet, dass er die Grundform eines Rings hat. Ein Ring ist ein Toroid. Dessen Symmetrieachse stimmt mit der Mittel- bzw. Drehachse des Planetenträgers überein.

Die Grundform eines geometrischen Körpers bezeichnet die Form eines ursprünglichen Körpers, aus dem der erstgenannte Körper durch Eliminieren einzelner Bereiche, etwa durch Einfügen von Aussparungen, und/oder durch Hinzufügen einzelner Bereiche entsteht.

Durch das Versteifungselement wird die Buchse partiell versteift. Dadurch ist es möglich, in der Planetenstufe einfach schrägverzahnte Verzahnungen zu verwenden. Ein Kippmoment, das durch axial wirkende Kräfte in den Zahneingriffen entsteht, wird durch das Versteifungselement gekontert, während die Buchse gegenüber Kräften, die in Umfangsrichtung wirken, nachgiebig bleibt. Hierdurch kann wie bei einem Flex-Pin ein Lastausgleich in den Zahneingriffen der Planetenstufe erfolgen.

Das Versteifungselement verläuft bevorzugt ausgehend von dem Stützring bezüglich der Dreh- bzw. Mittelachse des Planetenträgers radial nach außen. Dies bedeutet umgekehrt, dass es ausgehend von der Buchse bezüglich der Dreh- bzw. Mittelachse des Planetenträgers radial nach innen verläuft. Somit ist die Buchse bezüglich der Dreh- bzw. Mittelachse des Planetenträgers radial weiter außerhalb angeordnet als der Stützring. Ein Abstand der Buchse in einem Punkt, welcher der Dreh- bzw.

Mittelachse des Planetenträgers am nächsten kommt, zu der Dreh- bzw. Mittelachse des Planetenträgers ist größer als ein Abstand des Stützrings in einem Punkt, der von der Dreh- bzw. Mittelachse des Planetenträgers am weitesten entfernt ist, zu der Dreh- bzw. Mittelachse des Planetenträgers. Insbesondere kann die Buchse außerhalb eines geraden Kreiszylinders, dessen Mittelachse mit der Dreh- bzw. Mittelachse des Planetenträgers identisch ist, angeordnet sein, während sich der Stützring in dessen Innerem befindet.

Die Buchse und das Versteifungselement sind zweistückig miteinander verbunden.

Die Buchse und das Versteifungselement bilden also zwei physisch voneinander getrennte Stücke. Unter Gewähleistung der Montierbarkeit ermöglicht dies einen besonders einfachen Aufbau der Planetenstufe.

Das Versteifungselement kann direkt mit der Buchse gefügt sein. Erfindungsgemäß ist eine auf das erste axiale Ende der Buchse aufgesetzte Kappe vorgesehen. Die Kappe ist bevorzugt zu der Drehachse des Planetenrads rotationssymmetrisch. Sie Kappe umschließt das erste axiale Ende der Buchse. Umgekehrt befindet sich das erste axiale Ende im Inneren der Kappe. Dadurch kommt eine formschlüssige Verbindung zwischen der Buchse und der Kappe zustande. Bevorzugt ist die Kappe darüber hinaus kraftschlüssig mit der Buchse verbunden, um zu verhindern, dass die Buchse aus der Kappe herausrutscht.

Das Versteifungselement ist erfindungsgemäß direkt mit der Kappe gefügt. Über die Kappe kommt somit eine Fixierung zwischen dem Versteifungselement und der Buchse zustande.

Vorzugsweise dient die kappe nicht nur der Fixierung des Versteifungselements, sondern bildet darüber hinaus zusammen mit der Buchse einen Lagersitz. Insbesondere können die Buchse und die Kappe jeweils einen Kragen aufweisen, der als axiale Fixierung für mindestens ein Lager dient, mit dem ein Planetenrad auf dem Planetenbolzen gelagert ist.

In einer entsprechenden bevorzugten Weiterbildung bilden die Buchse und die Kappe jeweils eine bezüglich der Drehachse des Planetenrads axial verlaufende Fläche aus. Die beiden Flächen sind einander zugewandt und bilden entweder Anlageflächen zur Abstützung des Planetenlagers in axialer Richtung oder Gleitflächen des Planetenlagers.

Der Stützring ist in einer bevorzugten Weiterbildung freischwebend. Dies bedeutet, dass der Stützring kein Lager aufweist, sondern ausschließlich über den Planetenträger und den mindestens einen Zapfen gelagert ist.

Alternativ bildet der Stützring in einer ebenso bevorzugten Weiterbildung mindestens einen Lagersitz für ein Lager und/oder eine Lauffläche eines Lagers aus. Das Lager dient der Lagerung des Stützrings.

Ein bevorzugtes Ausführungsbeispiel der Erfindung ist in den Figuren dargestellt. Im Einzelnen zeigt:
Fig. 1 eine axiale Ansicht eines Planetenträgers; und
Fig. 2 eine Schnittdarstellung des Planetenträgers.

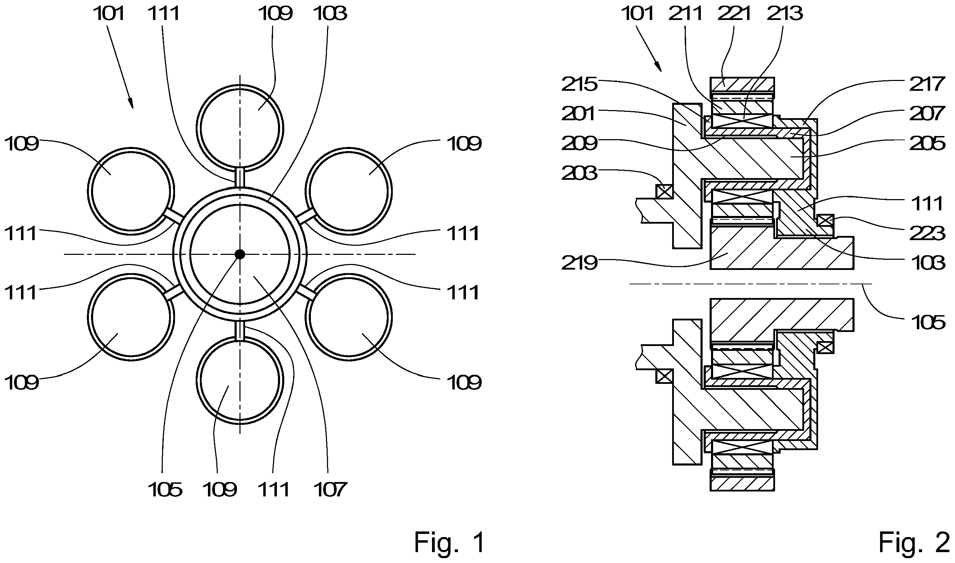

In Figur 1 ist zu erkennen, dass der Planetenträger 101 einen Stützring 103 aufweist. Der Stützring 103 ist zu einer Drehachse 105 des Planetenträgers 103 rotationssymmetrisch. Er umschließt einen Hohlraum 107, durch den die Drehachse 105 verläuft.

Der Planetenträger 101 weist darüber hinaus sternförmig angeordnete Kappen 109 auf. Ausgehend von dem Stützring 103 sind die Kappen 109 bezüglich der Drehachse 105 radial weiter außerhalb angeordnet.

Zwischen einer Kappe 109 und dem Stützring 103 erstreckt sich jeweils eine Versteifungsrippe 111. Bei den Rippen 111 handelt es sich um plattenförmige Elemente, deren Ausdehnung bezüglich der Drehachse 105 in axialer Richtung größer ist als ihre Dicke, d.h. ihre Ausdehnung orthogonal dazu. Die Dicke der Rippen 111 ist bevorzugt an jeder Stelle gleich. In jedem Querschnitt, d.h. in jedem orthogonal zu der Drehachse 105 verlaufenden Schnitt haben die Rippen 111 eine rechteckige Form. Insbesondere kann die Form in jedem Querschnitt gleichbleibend sein.

Einen Längsschnitt des Planetenträgers 101 zeigt Figur 2. Wie hier zu sehen ist, weist der Planetenträger 101 genau eine Wange 201 auf. In der Wange 201 befindet sich ein erstes Lager 203, mit dem der Planetenträger 101 um die Drehachse 105 drehbar gelagert ist.

Aus der Wange 201 stehen in axialer Richtung Zapfen 205 hervor. Die Zapfen 205 sind einstückig mit der Wange 201 verbunden. Sie haben jeweils die Form eines geraden Kreiszylinders.

Auf den Zapfen 205 ist jeweils eine Buchse 207 fixiert. Die Fixierung erfolgt nur einseitig. Zur anderen Seite hin verläuft zwischen jeweils einer Buchse 207 und einem Zapfen 205 ein Zwischenraum 209. Der Zwischenraum 209 erlaubt Verkippungen der Buchse 207 gegenüber dem Zapfen 205. Zusammen mit einer Verwindung des Zapfens 205 ergibt sich eine Verschiebung, d.h. translatorische Lageänderung der Buchse 207. Durch diese Lageänderung lässt sich die Lage eines Planetenrads 211 variieren, das mittels Lagern 213 drehbar auf der Buchse 207 gelagert ist.

Die Lager 213 sind axial zwischen einem Kragen 215 der Buchse 207 und einer Kappe 217 fixiert. Die Kappe 217 ist auf die Buchse 207 aufgesetzt.

Das Planetenrad 211 kämmt mit einem Sonnenrad 219 und einem Hohlrad 221. Sind das Planetenrad 211, das Sonnenrad 219 und das Hohlrad 221 schrägverzahnt, entstehen im Zahneingriff des Planetenrads 211 und des Sonnenrads 219 sowie im Zahneingriff des Planetenrads 211 und des Hohlrads 221 Kräfte in entgegengesetzte axiale Richtungen. Das infolgedessen auftretende Kippmoment wird durch die Versteifungsrippe 111 und den Stützring 103 gekontert.

Der Stützring 103 kann freischwebend ausgeführt sein oder, wie in Figur 2 dargestellt, mittels eines zweiten Lagers 223 in einem Getriebegehäuse gelagert sein.

### Bezugszeichen

- 101: Planetenträger
- 103: Stützring
- 105: Drehachse
- 107: Hohlraum
- 109: Kappe
- 111: Versteifungsrippe
- 201: Wange
- 205: Zapfen
- 207: Buchse
- 209: Zwischenraum
- 211: Planetenrad
- 213: Lager
- 215: Kragen
- 217: Kappe
- 219: Sonnenrad
- 221: Hohlrad
- 223: Lager

## Patentansprüche

1. Anordnung umfassend einen Planetenträger (101) mit mindestens einer Wange (201), einen Zapfen (205), einer Buchse (207), mindestens einem Versteifungselement (111) und einem ringförmigen Stützring (103); wobei
eine Symmetrieachse des Stützrings (203) mit einer Mittel- bzw. Drehachse des Planetenträgers (101) übereinstimmt; wobei
ein erstes Ende des Zapfens (205) in der Wange (201) fixiert ist; wobei mindestens ein Teil des Zapfens (205) in die Buchse (207) hineinragt; und wobei
ein zweites Ende des Zapfens (205) in der Buchse (207) fixiert ist; ; wobei das Versteifungselement (111) in der Buchse (207) und in dem Stützring (103) fixiert ist; und wobei
die Buchse (207) und das Versteifungselement (111) zweistückig miteinander verbunden sind; **gekennzeichnet durch**
eine auf ein erstes axiales Ende der Buchse (207) aufgesetzte Kappe (217); wobei das Versteifungselement (111) mit der Kappe (217) gefügt ist.

2. Anordnung nach dem vorhergehenden Anspruch; **dadurch gekennzeichnet, dass** die Buchse (207) eine erste radial verlaufende Fläche und die Kappe (217) eine zweite radial verlaufende Fläche ausbildet.

3. Anordnung nach einem der vorhergehenden Ansprüche; **dadurch gekennzeichnet, dass**
der Stützring (103) freischwebend angeordnet ist, da der Stützring kein Lager aufweist, sondern ausschließlich über den Planetenträger und den mindestens einen Zapfen gelagert ist.

4. Anordnung nach einem der Ansprüche 1 bis 2; **dadurch gekennzeichnet, dass** der Stützring (103) mindestens einen Lagersitz und/oder eine Lauffläche eines Lagers (223) ausbildet.

## Claims

1. Arrangement comprising a planet carrier (101) having at least one side piece (201), one pin (205), one bush (207), at least one reinforcement element (111) and an annular support ring (103); wherein
an axis of symmetry of the support ring (203) coincides with a central axis or axis of rotation of the planet carrier (101); wherein
a first end of the pin (205) is fixed in the side piece (201); wherein
at least one part of the pin (205) projects into the bush (207); and wherein
a second end of the pin (205) is fixed in the bush (207); wherein
the reinforcement element (111) is fixed in the bush (207) and in the support ring (103); and wherein the bush (207) and the reinforcement element (111) are connected to one another in two pieces;
**characterized by**
a cap (217) mounted onto a first axial end of the bush (207); wherein the reinforcement element (111) is joined to the cap(217).

2. Arrangement according to the preceding claim;
**characterized in that**
the bush (207) forms a first radially extending surface, and the cap (217) forms a second radially extending surface.

3. Arrangement according to either of the preceding claims; **characterized in that**
the support ring (103) is arranged in a freely suspended manner since the support ring has no bearing but is mounted exclusively via the planet carrier and the at least one pin.

4. Arrangement according to either of Claims 1 and 2;
**characterized in that**
the support ring (103) forms at least one bearing seat and/or one running surface of a bearing (223).

## Revendications

1. Agencement comprenant un porte-satellites (101) avec au moins une joue (201), un tourillon (205), une douille (207), au moins un élément de renforcement (111) et une bague de support annulaire (103) ;
un axe de symétrie de la bague de support (203) coïncidant avec un axe central ou de rotation du porte-satellites (101) ;
une première extrémité du tourillon (205) étant fixée dans la joue (201) ;
au moins une partie du tourillon (205) pénétrant dans la douille (207) ; et
une deuxième extrémité du tourillon (205) étant fixée dans la douille (207) ;
l'élément de renforcement (111) étant fixé dans la douille (207) et dans la bague de support (103) ; et
la douille (207) et l'élément de renforcement (111) étant reliés entre eux en deux parties ; **caractérisé par** un capuchon (217) placé sur une première extrémité axiale de la douille (207) ;
l'élément de renforcement (111) étant assemblé avec le capuchon (217).

2. Agencement selon la revendication précédente ; **caractérisé en ce que** la douille (207) forme une première surface s'étendant radialement et le capuchon (217) forme une deuxième surface s'étendant radialement.

3. Agencement selon l'une quelconque des revendications précédentes ; **caractérisé en ce que** la bague de support (103) est agencée de manière flottante car la bague de support ne présente pas de palier, mais est supportée exclusivement par le porte-satellites et l'au moins un tourillon.

4. Agencement selon l'une quelconque des revendications 1 à 2 ; **caractérisé en ce que** la bague de support (103) forme au moins un siège de palier et/ou une surface de roulement d'un palier (223).
